# EUROPÄISCHE PATENTSCHRIFT

(11) **EP 4 198 657 B1**
(45) Veröffentlichungstag und Bekanntmachung des Hinweises auf die Patenterteilung: **10.07.2024**
(21) Anmeldenummer: 21214730.0
(22) Anmeldetag: 15.12.2021
(51) Int. Cl.: G05B 19/042

(54) **VERFAHREN ZUM BETREIBEN EINER WINDENERGIEANLAGE SOWIE WINDENERGIEANLAGENSTEUERUNG ZUM AUSFÜHREN DES VERFAHRENS**
METHOD FOR OPERATING A WIND TURBINE AND WIND TURBINE CONTROL DEVICE FOR EXECUTING THE METHOD
PROCÉDÉ DE FONCTIONNEMENT D'UNE ÉOLIENNE, AINSI QUE COMMANDE D'ÉOLIENNE DESTINÉE À LA MISE EN OEUVRE DU PROCÉDÉ

(43) Veröffentlichungstag der Anmeldung: 21.06.2023
(73) Patentinhaber: Wobben Properties GmbH, 26607 Aurich (DE)
(72) Erfinder: Fuchs, Andreas, 25557 Hanerau-Hademarschen (DE)
(74) Vertreter: Eisenführ Speiser

(56) Entgegenhaltungen:
- EP-A1- 3 206 097
- EP-A1- 3 336 349

## Beschreibung

Die Erfindung betrifft den Bereich der Windenergieanlagen und hierbei insbesondere die Steuerung von Windenergieanlagen.

Aus dem Stand der Technik ist bekannt, dass eine Windenergieanlage, wenn sie in einem Windpark organisiert ist, über eine eigene Windenergieanlagensteuerung, die im Folgenden auch kurz Steuerung genannt wird, verfügt. Mit der Steuerung lassen sich beispielsweise vorherrschende Windverhältnisse eigenständig detektieren und in Abhängigkeit von diesen Windverhältnissen lässt sich der Betrieb der Windenergieanlage steuern oder regeln. Im Fall eines Windparks werden solche Steuer- oder Regelaufgaben teilweise auf Windparkregler ausgelagert, wobei dennoch auf eine Steuerung in der Windenergieanlage selbst nicht verzichtet werden kann, um etwa einen windenergieanlagenindividuellen Betrieb zu ermöglichen. Auch aus Sicherheitsgründen muss eine Steuerung einer Windenergieanlage vorhanden sein, um die Windenergieanlage im Fall eines Kommunikationsausfalls mit einem Windparkregler sicher wieder zu regeln oder in einen sicheren Zustand zu bringen.

Hierbei liegt der Steuerung einer Windenergieanlage eine Betriebssoftware zugrunde, die verschiedene Betriebsarten und/oder Betriebsfunktionen ausführen kann. Die Betriebsarten oder Betriebsfunktionen werden in der Betriebssoftware beispielsweise durch eine Sensorik oder Betreibervorgaben ausgewählt. Hierbei sind die Betriebsarten oder Betriebsfunktionen grundsätzlich so bereitgestellt, dass diese einen Betrieb der Windenergieanlage über ihre gesamte Lebensdauer ermöglichen.

Beispielsweise war eine Windenergieanlage bislang häufig für eine typische Lebensdauer von etwa 25 bis 30 Jahren ausgelegt, und es wurden Belastungsmodelle für die Windenergieanlage definiert, an denen sich die Betriebsarten und Betriebsfunktionen orientierten, um diese Lebensdauer zu erreichen. Hierdurch wurde ein Betrieb der Windenergieanlagen möglich, bei denen die Windenergieanlage, vorgegeben durch in der Regel vertraglich fest über im Wesentlichen die gesamte Lebensdauer geregelte Vergütungen, in geeigneter Weise betrieben werden konnte.

In jüngster Zeit verändern sich jedoch zunehmend häufiger im Laufe der Lebensdauer einer Windenergieanlage die Rahmenbedingungen. Derartige sich ändernde Rahmenbedingungen umfassen politische Entscheidungen bzgl. der Vergütung, zunehmend erhöhende Umweltauflagen, sich verändernde Bebauungen im Umfeld und steigende Anforderungen durch den Netzbetreiber. Teilweise stehen die einzelnen sich ändernden Rahmenbedingungen in unmittelbarem Zusammenhang miteinander. So werden beispielsweise neue Aufgaben zur Netzstützung bei Erfüllung durch den Betrieb durch eine angepasste Vergütung belohnt.

Um für diese sich ändernden Rahmenbedingungen den Betrieb der Windenergieanlage durch sich verändernde oder zusätzliche Betriebsarten oder Betriebsfunktionen anzupassen, ist häufig eine Aktualisierung der Betriebssoftware ausreichend aber auch teilweise eine Anpassung der Betriebshardware nötig. So kann beispielsweise eine Hardwarekomponente, die für die Optimierung einer bestimmten Betriebsart verwendet wird, zur Realisierung einer neuen Betriebsart ungeeignet sein oder es kann beispielsweise nur einen ineffizienten Betrieb in der geänderten Betriebsart gewährleistet werden. Ein Wechsel der Hardware ist in einem solchen Fall nötig. Dies betrifft in der Regel nur einzelne Komponenten, so dass eine Umrüstung der Windenergieanlage unter wirtschaftlichen Gesichtspunkten zunächst vertretbar ist. Durch Anpassen oder Auswechseln einer Hardwarekomponente ist aber üblicherweise auch eine vollständig neue Betriebssoftware, die an die sich geänderte Komponente angepasst ist, nötig.

Das Dokument EP 3 336 349 A1 offenbart beispielsweise ein Verfahren und System zum Konfigurieren von Windenergieanlagen. Gemäß der Offenbarung werden verschiedene Konfigurationsprofile erzeugt. Eines der Konfigurationsprofile kann als aktives Konfigurationsprofil ausgewählt werden, wobei diese aktive Konfiguration auch aktualisiert werden kann.

Im Bereich von Windenergieanlagen ist, wie auch bei anderen hochautomatisierten im Wesentlichen selbstständig agierenden Anlagen, jedoch allein aus Sicherheitsaspekten eine Zertifizierung einer Betriebssoftware nötig. Hierzu sind unter anderem umfangreiche Tests der Betriebssoftware nötig. Der Zertifizierungsprozess ist demnach sehr langwierig und damit kostenaufwendig, so dass eine Flexibilität bei der Anpassung der Hardware einer Windenergieanlage indirekt durch einen großen Aufwand für die Anpassung der Betriebssoftware geschmälert wird.

Aufgabe der vorliegenden Erfindung ist es daher, den Problemen des Standes der Technik zu begegnen. Insbesondere soll eine flexiblere Anpassbarkeit des Betriebs, insbesondere bei einer Veränderung der Hardware oder Neuverschaltung vorhandener Hardwarekomponenten, ermöglicht werden. Jedenfalls soll eine Alternative zum aus dem Stand der Technik Bekannten vorgeschlagen werden.

Hierzu betrifft die Erfindung ein Verfahren zum Betreiben einer Windenergieanlage nach Anspruch 1.

Erfindungsgemäß wird ein Verfahren zum Betreiben einer Windenergieanlage vorgeschlagen. Das Verfahren umfasst das Bereitstellen mehrerer Softwaremodule als Betriebssoftware zum Betreiben der Windenergieanlage. Jedes der Softwaremodule weist jeweils mindestens einen Kommunikationseingang und/oder mindestens einen Kommunikationsausgang auf. Ein Softwaremodul dient vorzugsweise zum Ausführen einer Teilaufgabe einer Gesamtaufgabe des Betreibens der Windenergieanlage. Die Softwaremodule empfangen Daten von anderen Softwaremodulen über ihren Kommunikationseingang während des Betriebs der Windenergieanlage und verarbeiten diese Daten entsprechend ihrer Teilaufgabe, um nach der Verarbeitung verarbeitete Daten wieder am Kommunikationsausgang auszugeben.

Gemäß dem Verfahren wird ferner eine Konfigurationsliste mit mehreren Einträgen bereitgestellt. Die Einträge ordnen jeweils einem Kommunikationseingang eines Softwaremoduls einen Kommunikationsausgang eines anderen Softwaremoduls zu. Es wird demnach durch die Konfigurationsliste eine gemeinschaftliche Liste für alle Softwaremodule bereitgestellt, um eine Vorgabe zu machen, wie die jeweiligen Kommunikationseingänge und Kommunikationsausgänge der Softwaremodule miteinander verschaltet werden sollen.

Gemäß dem Verfahren werden anhand der Einträge der Konfigurationsliste in einem weiteren Schritt für jeden Eintrag jeweils Informationen an ein Softwaremodul der Softwaremodule mit mindestens einem Kommunikationseingang übermittelt, die diesem Softwaremodul ermöglichen, auf Daten des Kommunikationsausgangs eines anderen Softwaremoduls, das in dem Eintrag dem Kommunikationseingang zugeordnet ist, zuzugreifen. Es erfolgt also in diesem Schritt für jeden Eintrag eine Identifikation eines Softwaremoduls mit einem Kommunikationseingang anhand des Eintrags der Konfigurationsliste, wobei Informationen an das identifizierte Softwaremodul gesendet werden, die diesem ermöglichen, auf den oder die im selben Eintrag zugeordneten Kommunikationsausgänge anderer Softwaremodule zuzugreifen, um Daten für ihren Kommunikationseingang zu erhalten.

Im darauffolgenden Schritt wird dann die Windenergieanlage mit den Softwaremodulen betrieben. Das heißt, dass vorzugsweise nachdem die Informationen aus jedem der Einträge der Konfigurationsliste an die entsprechenden Softwaremodule übertragen wurden, eine Verschaltung der Softwaremodule abgeschlossen ist. Die Softwaremodule können dann unabhängig von der Konfigurationsliste miteinander kommunizieren, so dass die Windenergieanlage mit den Softwaremodulen ohne die Konfigurationsliste betreibbar ist.

Demnach dient die Konfigurationsliste zum Organisieren einer Kommunikation der Softwaremodule untereinander. Werden einzelne Softwaremodule, die beispielsweise für die Steuerung einer bestimmten Hardwarekomponente vorgesehen sind, ausgetauscht, so genügt es, dieses einzelne Softwaremodul, das der neuen Komponente zugeordnet ist, zu verifizieren, um einen einwandfreien Betrieb sicherzustellen.

Allein durch Anpassen der Konfigurationsliste können so neue Softwaremodule in einen Bestand einer Vielzahl von nicht geänderten Softwaremodulen integriert und so einfach vollkommen neue Betriebsmodi geschaffen werden. Dies ist bereits auch möglich, indem beispielsweise Kommunikationseingänge und Kommunikationsausgänge andersartig miteinander verschaltet werden. Einzelne neue oder sich ändernde Softwaremodule können allein über die Konfigurationsliste integriert werden. Eine Anpassung aller Softwaremodule an ein einzelnes sich geändertes oder hinzugefügtes Softwaremodul ist demnach nicht mehr nötig.

Eine Flexibilität einer Betriebssoftware und somit eines angepassten Betriebs an sich verändernde Rahmenbedingungen des Betriebs einer Windenergieanlage wird damit erhöht.

Gemäß einer ersten Ausführungsform werden die zuvor genannten Schritte, abgesehen vom Betreiben der Windenergieanlage mit den Softwaremodulen selbst, nämlich das Bereitstellen der Softwaremodule, das Bereitstellen der Konfigurationsliste und das Übermitteln von Informationen nach einem Aktivieren einer Steuerung der Windenergieanlage, einmalig ausgeführt. Ein Aktivieren umfasst hier vorzugsweise das Einschalten oder Neustarten der Steuerung der Windenergieanlage. Demnach ist eine Änderung der Konfiguration der Betriebssoftware mit jedem Aktivieren der Steuerung, also insbesondere einem Booten der Betriebssoftware, möglich. Demgegenüber ist eine Änderung von einmal übermittelten Informationen der Konfigurationsliste an die Softwaremodule nach einem Neustart nicht mehr möglich, bis ein weiterer Neustart erfolgt. Insofern wird sichergestellt, dass während eines laufenden Betriebs der Windenergieanlage keine Konfigurationsänderung der Betriebssoftware möglich ist, die zu unsicheren Betriebszuständen führen könnte.

Gemäß einer weiteren Ausführungsform ist jedem Kommunikationsausgang ein Identifikator zugeordnet. Der Identifikator umfasst vorzugsweise eine Adresse oder vergleichbare Daten, die es ermöglichen, auf den Kommunikationsausgang zuzugreifen. Die Informationen, die anhand der Konfigurationsliste an die Softwaremodule mit den Kommunikationseingängen gesendet werden, umfassen gemäß dieser Ausführungsform den Identifikator des jeweils über den jeweiligen Eintrag zugeordneten Kommunikationsausgangs. Hierdurch ist jedem Softwaremodul mit einem Kommunikationseingang ein eindeutiger Zugang zu Daten des Kommunikationsausgangs eines anderen Softwaremoduls möglich, da die Kommunikationsausgänge eindeutig durch den Identifikator gekennzeichnet sind. Eine einfache Zuordnung der Kommunikationsausgänge zu Kommunikationseingängen anderer Softwaremodule ist somit möglich.

Gemäß einer weiteren Ausführungsform ist jedem der Kommunikationsausgänge eine Variable zugeordnet. Diese Variable kann auch als Symbol bezeichnet werden. Ausgangsdaten eines Kommunikationsausgangs werden in der zugeordneten Variable bereitgestellt. Die Variable enthält also die Daten des Kommunikationsausgangs, dem gleichzeitig der Identifikator zugeordnet ist. Der Kommunikationsausgang stellt demnach in der Variable seine Daten bereit, die dann von einem Softwaremodul, das den zugeordneten Identifikator zum Kommunikationsausgang, also insbesondere zur Variable kennt, abgerufen werden können. Vorzugsweise umfasst der Kommunikationsausgang somit eine Speicherstelle, die als Variable bezeichnet werden kann, und in der Ausgangsdaten gespeichert werden. Die Adresse dieser Speicherstelle wird beispielsweise als Identifikator betrachtet. Die Daten eines Kommunikationsausgangs sind daher auch von mehreren Kommunikationseingängen einfach abrufbar, indem diese aus der Variable, auf die durch den Identifikator zugreifbar ist, auf den Kommunikationsausgang zugreifen.

Gemäß einer weiteren Ausführungsform ist mindestens ein Kommunikationseingang, der zum Empfang von Steuersignalen eingerichtet ist, eingerichtet, um Daten an den zugeordneten Kommunikationsausgang zurückzusenden. Diese Daten umfassen vorzugsweise eine Empfangsbestätigung, insbesondere in dem Fall, dass vom Kommunikationseingang abgerufene Daten Steuerbefehle umfassen.

Demnach ruft ein Kommunikationseingang vorzugsweise über einen Identifikator einen Steuerbefehl aus einer Variable, also einem Symbol, eines Kommunikationsausgangs eines anderen Softwaremoduls ab. Wurde ein Steuerbefehl dann vom Softwaremodul empfangen und vorzugsweise als plausibel geprüft, gibt der Kommunikationsausgang über den ihm bekannten Identifikator Daten an den Kommunikationsausgang zurück, die vorzugsweise nur eine Empfangsbestätigung des Steuersignals umfassen. So ist im Softwaremodul, das den Steuerbefehl oder andere Daten bereitstellt, überprüfbar, dass die bereitgestellten Steuerbefehle oder Daten auch von den erwarteten Softwaremodulen abgerufen werden.

Gemäß einer weiteren Ausführungsform umfasst das Verfahren eine Initialisierungsphase. In der Initialisierungsphase, die vorzugsweise vor dem Übermitteln der Informationen an die Softwaremodule erfolgt, melden alle Softwaremodule, die mindestens einen Kommunikationsausgang aufweisen, einem Zentralsoftwaremodul den oder die Identifikatoren ihres oder ihrer Kommunikationsausgänge. Insbesondere werden also die Identifikatoren der dem Kommunikationsausgang zugeordneten Variablen dem Zentralsoftwaremodul mitgeteilt. Im Zentralsoftwaremodul wird vorzugsweise auch die Konfigurationsliste gespeichert oder nach einer Aktualisierung neu gespeichert. Auch die Initialisierungsphase erfolgt vorzugsweise nach einem Aktivieren einer Steuerung der Windenergieanlage einmalig. Die Identifikatoren können vorzugsweise als Zeiger ausgeführt sein, die auf die Variable des entsprechend zugeordneten Kommunikationsausgangs zeigen und somit durch Integration in eines der anderen Softwaremodule Daten der Variablen unmittelbar bereitstellen.

Durch die Initialisierungsphase ist beim Aktivieren einer Windenergieanlagensteuerung zunächst dem Zentralsoftwaremodul bekannt, welche Kommunikationsausgänge überhaupt in der Betriebssoftware bereitgestellt sind, so dass das Zentralsoftwaremodul anhand der Konfigurationsliste eine entsprechende Verschaltung oder Vergabe der Daten dieser Ausgänge an andere Softwaremodule ausführen kann. Insbesondere fehlende, also anhand der Konfigurationsliste erwartete aber nicht mitgeteilte, Kommunikationsausgänge können so erkannt werden.

Gemäß einer weiteren Ausführungsform umfasst das Verfahren eine Initialisierungsabschlussphase. Die Initialisierungsabschlussphase folgt vorzugsweise auf die Initialisierungsphase. In der Initialisierungsabschlussphase rufen alle Softwaremodule, die mindestens einen Kommunikationseingang aufweisen, den Identifikator vom Zentralsoftwaremodul ab, der in dem zugehörigen Eintrag zugeordnet ist. Der Identifikator wird dann nach dem Abruf im jeweiligen Softwaremodul, das den Identifikator abgerufen hat, gespeichert. Somit kann nach der Initialisierungsabschlussphase auch ohne das Zentralsoftwaremodul und die Konfigurationsliste ein Datenaustausch der Softwaremodule stattfinden.

Gemäß einer weiteren Ausführungsform wird die Initialisierungsabschlussphase nach der Initialisierungsphase ausgeführt. Die Initialisierungsphase wird dann ausgeführt, wenn alle Softwaremodule, die mindestens einen Kommunikationsausgang aufweisen, an das Zentralsoftwaremodul gemeldet haben, dass sie ihre Identifikatoren mitgeteilt haben. Es wird somit sichergestellt, dass die Initialisierungsabschlussphase nicht ausgeführt wird, bevor alle Softwaremodule ihre Kommunikationsausgänge bereitgestellt haben. Werden Identifikatoren bestimmter Kommunikationsausgänge nämlich noch nicht an das Zentralsoftwaremodul gemeldet, so würde bei der Zuordnung anhand der Konfigurationsliste ein Fehler auftreten und gekennzeichnet werden, der jedoch vermeidbar ist.

Gemäß einer weiteren Ausführungsform wird in der Initialisierungsabschlussphase ferner von einem Softwaremodul an das Zentralsoftwaremodul gemeldet, wenn seinem Kommunikationseingang ein Identifikator zugeordnet wird, der keinem Kommunikationsausgang entspricht. Alternativ wird von einem Softwaremodul an das Zentralsoftwaremodul auch gemeldet, wenn in der Konfigurationsliste kein Eintrag vorhanden ist, der dem Kommunikationseingang einen Identifikator zuordnet. Es wird somit sichergestellt, dass alle Kommunikationseingänge auch Daten erhalten können. Ein Fehlverhalten durch undefinierte Werte an einem nicht zugeordneten Dateneingang wird so verhindert.

Gemäß einer weiteren Ausführungsform erfolgt der Abruf von Daten zyklisch für mehrere oder alle Softwaremodule und/oder auf Anfrage eines Softwaremoduls für mehrere oder alle Softwaremodule. Das heißt, es werden takt- oder ereignisbasiert von mehreren oder allen Softwareeingängen die Daten der zugeordneten Kommunikationsausgänge gleichzeitig abgerufen. Hierdurch ist sichergestellt, dass unterschiedliche Softwaremodule, die auf Daten des gleichen Kommunikationsausgangs zugreifen, zu einem Abrufzeitpunkt identische Werte erhalten. Ein deterministisches Verhalten der Software wird somit gewährleistet.

Gemäß einer weiteren Ausführungsform wird ein einziges Softwaremodul der Betriebssoftware, das auch Schnittstellensoftwaremodul genannt werden kann, bereitgestellt. Das Schnittstellensoftwaremodul stellt eine Schnittstelle zwischen der Betriebssoftware und einer Hardware der Windenergieanlage bereit. Mit dem Schnittstellensoftwaremodul werden alle Hardwareeingänge als entsprechende Kommunikationseingänge und alle Hardwareausgänge als entsprechende Kommunikationsausgänge des einzigen Softwaremoduls bereitgestellt. Ein zentraler Abruf oder eine Ansteuerung der Komponenten ist somit über dieses Softwaremodul möglich, das eine einzige Schnittstelle zwischen übrigen Softwaremodulen und der Hardware einer Windenergieanlage bereitstellt. Im Fall neu bereitgestellter Hardware ist es zum Beispiel möglich, dass die gesamte Betriebssoftware allein durch Anpassen dieses Schnittstellensoftwaremoduls auf die neue Hardware zugreifen kann. Ausführende Softwaremodule, die beispielsweise eine Regelung oder Steuerung der Windenergieanlage vornehmen, müssen somit nicht verändert werden, auch wenn diese auf geänderte Hardwarekomponenten zugreifen sollen. Lediglich das geänderte Schnittstellensoftwaremodul muss somit neu getestet und verifiziert werden. Ein derartiger Test eines als Schnittstelle ausgebildeten Softwaremoduls ist vergleichsweise einfacher auszuführen als eines Softwaremoduls, das eine Funktion oder Steuerung ausführt.

Ferner umfasst die Erfindung ein Computerprogrammprodukt, das Instruktionen umfasst, die, wenn sie auf einer Windenergieanlagensteuerung ausgeführt werden, eingerichtet sind, das Verfahren nach einer der vorgenannten Ausführungsformen auszuführen.

Außerdem umfasst die Erfindung eine Windenergieanlagensteuerung für eine Windenergieanlage. Die Windenergieanlagensteuerung ist eingerichtet, insbesondere, wenn sie das zuvor genannte Computerprogrammprodukt umfasst, das Verfahren nach einer der vorgenannten Ausführungsformen auszuführen.

Außerdem umfasst die Erfindung eine Windenergieanlage mit der Steuerung gemäß der Erfindung.

Weitere Ausführungsformen ergeben sich anhand der in den Figuren näher erläuterten Ausführungsbeispiele. Hierbei zeigen:
- Figur 1: eine Windenergieanlage,
- Figur 2: einen strukturellen Aufbau einer Betriebssoftware gemäß der Erfindung,
- Figur 3: die Schritte des Verfahrens gemäß einem Ausführungsbeispiel und
- Figur 4: die Phasen des Verfahrens gemäß einem Ausführungsbeispiel.

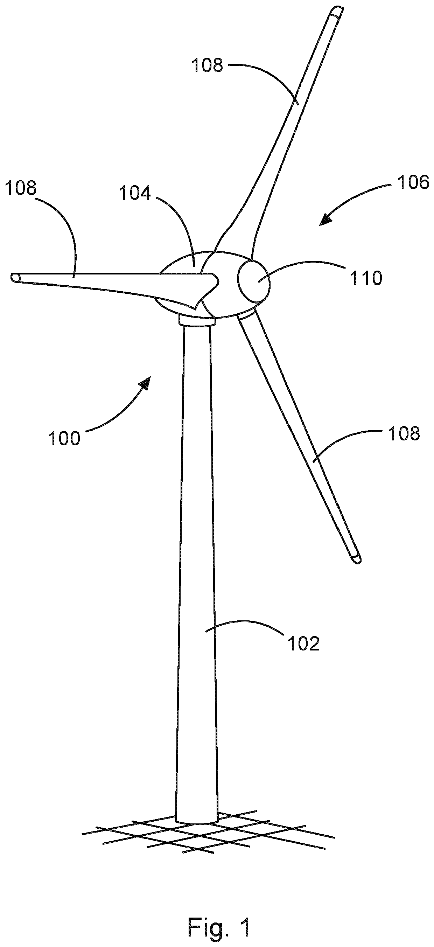

Figur 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

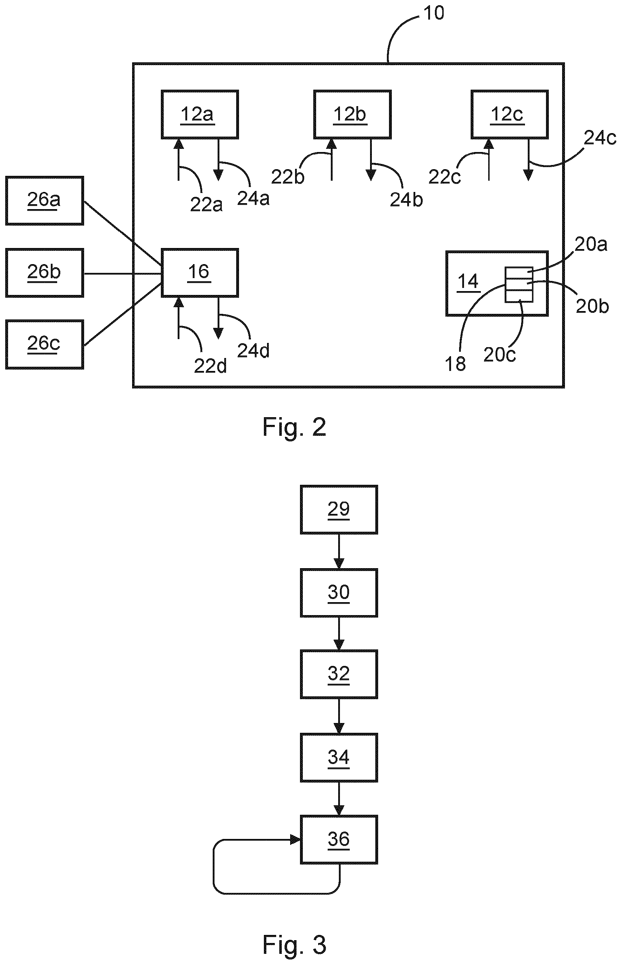

Figur 2 zeigt einen strukturellen Aufbau einer Betriebssoftware 10, die gemäß einem Ausführungsbeispiel der Erfindung modular aufgebaut ist. Die Betriebssoftware 10 umfasst mehrere Softwaremodule 12a, 12b, 12c, 16 und entspricht einem Zentralsoftwaremodul 14, das eine Konfigurationsliste 18 aufweist. Die Konfigurationsliste 18 umfasst Einträge 20a, 20b, 20c, mit denen Kommunikationseingänge 22a, 22b, 22c der Softwaremodule 12a, 12b, 12c, 16 und Kommunikationsausgänge 24a, 24b, 24c der Softwaremodule 12a, 12b, 12c, 16 miteinander bei einem Aktivieren oder Booten der Betriebssoftware 10 verbunden werden. Die Einträge 20a, 20b, 20c dienen zur Zuordnung jeweils eines der Kommunikationsausgänge 24a, 24b, 24c zu jedem der Kommunikationseingänge 22a, 22b, 22c.

Auch das Softwaremodul 16, das einem Schnittstellensoftwaremodul 16 entspricht, weist mindestens einen Kommunikationseingang 22d und mindestens einen Kommunikationsausgang 24d auf. Das Schnittstellensoftwaremodul 16 ist mit Hardwareschnittstellen 26a, 26b, 26c der Windenergieanlage 100 verbunden, die beispielsweise digitalen Eingängen, digitalen Ausgängen, analogen Eingängen, analogen Ausgängen und Verbindungen zu Bussystemen entsprechen. Die Hardwareschnittstellen 26a, 26b, 26c werden durch das Schnittstellensoftwaremodul 16 als Kommunikationseingänge 22d oder Kommunikationsausgänge 24d bereitgestellt.

Die Softwaremodule 12a, 12b, 12c stehen stellvertretend für eine Vielzahl von Softwaremodulen 12a, 12b, 12c, die einzelne Komponenten der Windenergieanlage 100 steuern oder regeln, also Teilaufgaben eines Betriebs der Windenergieanlage ausführen. Beispielsweise kann das Softwaremodul 12a für die Verarbeitung von Wetterdaten vorgesehen sein, und das Modul 12b für die Regelung der Verstellantriebe der Rotorblätter 108, nämlich für das Pitchen. Über das Schnittstellensoftwaremodul 16 können demnach beispielsweise Wetterdaten empfangen werden, die dem Softwaremodul 12a zugeführt werden müssen, um hieraus beispielsweise Parameter des Windes zu bestimmen. Diese Parameter des Windes müssen wiederum im Softwaremodul 12b für eine Regelung der Anstellwinkel der Rotorblätter 108 verwendet werden. Das Ansteuern der Rotorblätter 108 erfolgt wieder, indem dann der Kommunikationsausgang 24b über das Schnittstellensoftwaremodul 16 entsprechende Steuerbefehle, nämlich Verstellsignale, an die Rotorblattverstellantriebe aussendet. Gemäß der Darstellung in Figur 1 sind im Grundzustand der Betriebssoftware 10 die Softwaremodule bzgl. ihrer Kommunikationseingänge 22a, 22b, 22c, 22d und ihrer Kommunikationsausgänge 24a, 24b, 24c, 24d nicht verschaltet und können somit die zuvor genannte Regelung der Rotorblätter 108 nicht ausführen. Erst beim Booten oder Initialisieren über das Zentralsoftwaremodul 14 werden die Softwaremodule 12a, 12b, 12c, 16 entsprechend der Einträge 20a, 20b, 20c der Konfigurationsliste 18 miteinander verschaltet. Dies erfolgt anhand des in Figur 3 dargestellten Verfahrens zum Betreiben einer Windenergieanlage 100.

Demnach zeigt Figur 3 ein Verfahren zum Betreiben einer Windenergieanlage 100. In einem Schritt 30 des Verfahrens werden die mehreren Softwaremodule 12a, 12b, 12c, 16 und ein Zentralsoftwaremodul 14 als Betriebssoftware 10 zum Betreiben der Windenergieanlage 100 bereitgestellt. Die Softwaremodule 12a, 12b, 12c, 16 umfassen jeweils mindestens einen Kommunikationseingang 22a, 22b, 22c, 22d und/oder mindestens einen Kommunikationsausgang 24a, 24b, 24c, 24d. Im Schritt 32 wird eine Konfigurationsliste 18 mit mehreren Einträgen 20a, 20b, 20c im Zentralsoftwaremodul 14 bereitgestellt. Hierbei ordnet jeder Eintrag 20a, 20b, 20c jeweils einem Kommunikationseingang 22a, 22b, 22c, 22d eines Softwaremoduls 12a, 12b, 12c, 16 einen Kommunikationsausgang 24a, 24b, 24c, 24d eines anderen Softwaremoduls 12a, 12b, 12c, 16 zu.

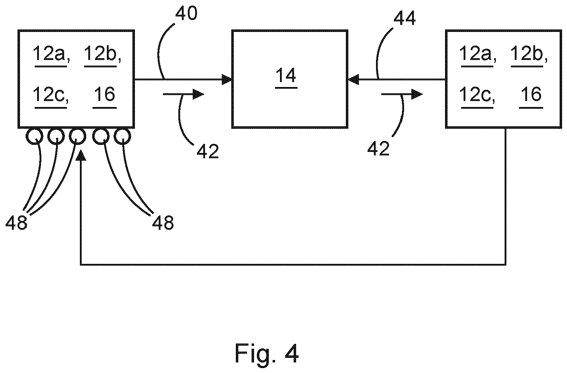

Im Schritt 34 werden für jeden Eintrag 20a, 20b, 20c Informationen des jeweiligen Eintrags 20a, 20b, 20c an ein Softwaremodul 12a, 12b, 12c, 16 der Softwaremodule 12a, 12b, 12c, 16 mit mindestens einem Kommunikationseingang 22a, 22b, 22c, 22d gesendet, die dem Softwaremodul 12a, 12b, 12c, 16 ermöglichen, auf Daten des Kommunikationsausgangs 24a, 24b, 24c, 24d eines anderen Softwaremoduls 12a, 12b, 12c, 16 zuzugreifen, das in dem Eintrag 20a, 20b, 20c dem Kommunikationseingang 22a, 22b, 22c, 22d zugeorndet ist. Im Schritt 36 wird dann die Windenergieanlage 100 mit den Softwaremodulen 12a, 12b, 12c, 16 betrieben. Die Schritte 30 bis 34 werden einmalig nach einem Aktivieren in einem Schritt 29 ausgeführt, wobei das Betreiben der Windenergieanlage 100 im Schritt 36 solange ausgeführt wird, bis die Betriebssoftware 10 bzw. die Windenergieanlage 100 abgeschaltet wird. Der Schritt 34 ist gemäß einem Ausführungsbeispiel Teil einer von mehreren Phasen, die nach Schritt 32 beim Booten der Betriebssoftware 10 ausgeführt werden. Diese Phasen sind in Figur 4 dargestellt.

Figur 4 zeigt eine Initialisierungsphase 40, bei der alle Softwaremodule 12a, 12b, 12c, 16 dem Zentralsoftwaremodul 14 Identifikatoren 42 übertragen, denen jeweils ein Kommunikationsausgang 24a, 24b, 24c, 24d zugeordnet ist. In einer darauffolgenden Initialisierungsabschlussphase 44 werden dann von den Softwaremodulen 12a, 12b, 12c, 16 die Identifikatoren 42 entsprechend der Konfigurationsliste 18 abgerufen. In jedem der Softwaremodule 12a, 12b, 12c werden somit entsprechend der Konfigurationsliste 18 die Identifikatoren 42 abgerufen, die einem Kommunikationseingang 22a, 22b, 22c, 22d eines jeweiligen Softwaremoduls 12a, 12b, 12c, 16 einen Kommunikationsausgang 24a, 24b, 24c, 24d zuordnen. Diese Identifikatoren 42 werden in den Softwaremodulen 12a, 12b, 12c, 16 gespeichert, so dass in einer darauffolgenden Betriebsphase 46 die Softwaremodule 12a, 12b, 12c, 16 anhand der Identifikatoren 42 auf den Kommunikationsausgängen 24a, 24b, 24c, 24d zugeordnete Variablen 48 zugreifen können. In der Betriebsphase 46 wird demnach das Softwaremodul 14 nicht mehr verwendet.

### Bezugszeichenliste

- 10: Betriebssoftware
- 12a: Softwaremodul
- 12b: Softwaremodul
- 12c: Softwaremodul
- 14: Zentralsoftwaremodul
- 16: Schnittstellensoftwaremodul
- 18: Konfigurationsliste
- 20a: Eintrag
- 20b: Eintrag
- 20c: Eintrag
- 22a: Kommunikationseingang
- 22b: Kommunikationseingang
- 22c: Kommunikationseingang
- 22d: Kommunikationseingang
- 24a: Kommunikationsausgang
- 24b: Kommunikationsausgang
- 24c: Kommunikationsausgang
- 24d: Kommunikationsausgang
- 26a: Hardwareschnittstelle
- 26b: Hardwareschnittstelle
- 26c: Hardwareschnittstelle
- 29: Aktivieren
- 30: Bereitstellen Softwaremodule
- 32: Bereitstellen Konfigurationsliste
- 34: Senden von Informationen
- 36: Betreiben Windenergieanlage
- 40: Initialisierungsphase
- 42: Identifikatoren
- 44: Initialisierungsabschlussphase
- 46: Betriebsphase
- 48: Variablen
- 100: Windenergieanlage
- 102: Turm
- 104: Gondel
- 106: aerodynamischer Rotor
- 108: Rotorblätter
- 110: Spinner

## Patentansprüche

1. Verfahren zum Betreiben einer Windenergieanlage (100), umfassend den von einer Steuerung einer Windenergieanlage ausgeführten Schritt:
a) Bereitstellen mehrerer Softwaremodule (12a, 12b, 12c, 16) als eine Betriebssoftware (10) zum Betreiben der Windenergieanlage (100), wobei die Softwaremodule (12a, 12b, 12c, 16) jeweils mindestens einen Kommunikationseingang (22a, 22b, 22c, 22d) und/oder mindestens einen Kommunikationsausgang (24a, 24b, 24c, 24d) aufweisen,
**gekennzeichnet durch**
die weiteren von der Steuerung einer Windenergieanlage ausgeführten Schritte:
b) Bereitstellen einer Konfigurationsliste (18) mit mehreren Einträgen (20a, 20b, 20c), wobei die Einträge jeweils einem Kommunikationseingang (22a, 22b, 22c, 22d) eines Softwaremoduls (12a, 12b, 12c, 16), einen Kommunikationsausgang (24a, 24b, 24c, 24d) eines anderen Softwaremoduls (12a, 12b, 12c, 16) zuordnen,
c) Übermitteln, für jeden Eintrag (20a, 20b, 20c) jeweils, von Informationen des jeweiligen Eintrags (20a, 20b, 20c) an das Softwaremodul (12a, 12b, 12c, 16) der Softwaremodule (12a, 12b, 12c, 16) mit dem mindestens einen Kommunikationseingang (22a, 22b, 22c, 22d), der in dem jeweiligen Eintrag (20a, 20b, 20c) einem anderen Softwaremodul (12a, 12b, 12c, 16) zugeordnet ist, die dem Softwaremodul (12a, 12b, 12c, 16) ermöglichen, auf Daten des Kommunikationsausgangs (24a, 24b, 24c, 24d) des anderen Softwaremoduls (12a, 12b, 12c, 16), das in dem Eintrag (20a, 20b, 20c) dem Kommunikationseingang (22a, 22b, 22c, 22d) zugeordnet ist, zuzugreifen,
d) Betreiben der Windenergieanlage (100) mit den Softwaremodulen (12a, 12b, 12c, 16).

2. Verfahren nach Anspruch 1, wobei die Schritte a) bis c) nach einem Aktivieren (29oder Einschalten oder Neustarten einer Steuerung der Windenergieanlage (100), einmalig ausgeführt werden.

3. Verfahren nach Anspruch 1 oder 2, wobei zumindest jedem Kommunikationsausgang (24a, 24b, 24c, 24d) ein Identifikator (42) zugeordnet ist, und die Informationen den jeweiligen Identifikator (42) des zugeordneten Kommunikationsausgangs (24a, 24b, 24c, 24d) umfassen.

4. Verfahren nach einem der vorhergehenden Ansprüche, wobei jedem Kommunikationsausgang (24a, 24b, 24c, 24d) eine Variable (48), die auch Symbol genannt wird, zugeordnet ist, und Ausgangsdaten eines Kommunikationsausgangs (24a, 24b, 24c, 24d) oder eine Kopie der Ausgangsdaten eines Kommunikationsausgangs (24a, 24b, 24c, 24d), in der zugeordneten Variable (48) bereitgestellt werden.

5. Verfahren nach einem der vorhergehenden Ansprüche, wobei mindestens ein Kommunikationseingang (22a, 22b, 22c, 22d), der zum Empfang von Steuersignalen eingerichtet ist, Daten oder eine Empfangsbestätigung an den zugeordneten Kommunikationsausgang (24a, 24b, 24c, 24d) zurücksendet.

6. Verfahren nach einem der vorhergehenden Ansprüche, wobei das Verfahren eine Initialisierungsphase (40) umfasst, in der alle Softwaremodule (12a, 12b, 12c, 16), die mindestens einen Kommunikationsausgang (24a, 24b, 24c, 24d) aufweisen, einem Zentralsoftwaremodul (14) den oder die Identifikatoren (42) ihres oder ihrer Kommunikationsausgänge (24a, 24b, 24c, 24d) mitteilen.

7. Verfahren nach einem der vorhergehenden Ansprüche, wobei das Verfahren eine Initialisierungsabschlussphase (44) umfasst, in der alle Softwaremodule (12a, 12b, 12c, 16), die mindestens einen Kommunikationseingang (22a, 22b, 22c, 22d) aufweisen, den Identifikator (42) vom Zentralsoftwaremodul (14) abrufen, der in dem zugehörigen Eintrag (20a, 20b, 20c) zugeordnet ist, wobei der Identifikator (42) nach dem Abruf im jeweiligen Softwaremodul (12a, 12b, 12c, 16), das den Identifikator (42) abgerufen hat, gespeichert wird.

8. Verfahren nach Anspruch 7, wobei die Initialisierungsabschlussphase (44) auf die Initialisierungsphase (40) folgt und dann ausgeführt wird, wenn alle Softwaremodule (12a, 12b, 12c, 16), die mindestens einen Kommunikationsausgang (24a, 24b, 24c, 24d) aufweisen, an das Zentralsoftwaremodul (14) gemeldet haben, dass sie ihre Identifikatoren (42) mitgeteilt haben.

9. Verfahren nach Anspruch 7 oder 8, wobei in der Initialisierungsabschlussphase (44) eines der Softwaremodule (12a, 12b, 12c, 16) an das Zentralsoftwaremodul (14) meldet, wenn seinem Kommunikationseingang (22a, 22b, 22c, 22d) ein Identifikator (42) zugeordnet wird, der keinem Kommunikationseingang (22a, 22b, 22c, 22d) entspricht oder in der Konfigurationsliste (18) kein Eintrag (20a, 20b, 20c) vorhanden ist, der dem Kommunikationseingang (22a, 22b, 22c, 22d) einen Identifikator (42) zuordnet.

10. Verfahren nach einem der vorhergehenden Ansprüche, wobei das Verfahren eine Betriebsphase (46) umfasst, in der eines der Softwaremodule (12a, 12b, 12c, 16) mit seinem Kommunikationseingang (22a, 22b, 22c, 22d) Daten von dem Kommunikationsausgang (24a, 24b, 24c, 24d), abruft.

11. Verfahren nach Anspruch 10, wobei ein Abruf von Daten zyklisch für mehrere Softwaremodule (12a, 12b, 12c, 14, 16) und/oder auf Anfrage eines Softwaremoduls (12a, 12b, 12c, 14, 16) für mehrere Softwaremodule (12a, 12b, 12c, 14, 16) erfolgt.

12. Verfahren nach einem der vorhergehenden Ansprüche, wobei ein einziges der Softwaremodule (12a, 12b, 12c, 14, 16), nämlich ein Schnittstellensoftwaremodul (16), eine Schnittstelle zwischen der Betriebssoftware (10) und einer Hardware der Windenergieanlage (100) bereitstellt und alle Hardwareeingänge als Kommunikationseingänge (22a, 22b, 22c, 22d) und alle Hardwareausgänge als Kommunikationsausgänge (24a, 24b, 24c, 24d) durch das Schnittstellensoftwaremodul (16) bereitgestellt werden.

13. Computerprogrammprodukt, das Instruktionen umfasst, die, wenn sie auf einer Windenergieanlagensteuerung ausgeführt werden, eingerichtet sind, das Verfahren nach einem der Ansprüche 1 bis 12 auszuführen.

14. Windenergieanlagensteuerung für eine Windenergieanlage (100), die durch ein Computerprogrammprodukt nach Anspruch 13 eingerichtet ist, das Verfahren nach einem der Ansprüche 1 bis 12 auszuführen.

15. Windenergieanlage (100) mit einer Steuerung nach Anspruch 14.

## Claims

1. A method for operating a wind turbine (100), comprising the step performed by a controller of a wind turbine:
a) Providing several software modules (12a, 12b, 12c, 16) as an operating software (10) for operating the wind turbine (100), wherein the software modules (12a, 12b, 12c, 16) each have at least one communications input (22a, 22b, 22c, 22d) and/or at least one communications output (24a, 24b, 24c, 24d),
**characterized by**
the further steps performed by the controller of a wind turbine:
b) Providing a configuration list (18) with several entries (20a, 20b, 20c), wherein the entries each assign to a respective communications input (22a, 22b, 22c, 22d) of a software module (12a, 12b, 12c, 16) a communications output (24a, 24b, 24c, 24d) of another software module (12a, 12b, 12c, 16),
c) For each respective entry (20a, 20b, 20c), transmitting information of the respective entry (20a, 20b, 20c) to the software module (12a, 12b, 12c, 16) of the software modules (12a, 12b, 12c, 16) with the at least one communications input (22a, 22b, 22c, 22d) which in the respective entry (20a, 20b, 20c) is assigned to another software module (12a, 12b, 12c, 16), which allows the software module (12a, 12b, 12c, 16) to access data of the communications output (24a, 24b, 24c, 24d) of the another software module (12a, 12b, 12c, 16), which in the entry (20a, 20b, 20c) is assigned to the communications input (22a, 22b, 22c, 22d),
d) Operating the wind turbine (100) with the software modules (12a, 12b, 12c, 16).

2. The method according to claim 1, wherein steps a) to c) are performed one time after activating (29) or switching on or restarting a controller or wind turbine (100).

3. The method according to claim 1 or 2, wherein an identifier (42) is assigned to at least each communications output (24a, 24b, 24c, 24d), and the information comprises the respective identifier (42) of the assigned communications output (24a, 24b, 24c, 24d).

4. The method according to one of the preceding claims, wherein a variable (48), which is also referred to as a symbol, is assigned to each communications output (24a, 24b, 24c, 24d), and output data of a communications output (24a, 24b, 24c, 24d) or a copy of the output data of a communications output (24a, 24b, 24c, 24d) are provided in the assigned variable (48).

5. The method according to one of the preceding claims, wherein at least one communications input (22a, 22b, 22c, 22d), which is set up to receive control signals, sends data or a receipt confirmation back to the assigned communications output (24a, 24b, 24c, 24d).

6. The method according to one of the preceding claims, wherein the method comprises an initialization phase (40), in which all software modules (12a, 12b, 12c, 16) having at least one communications output (24a, 24b, 24c, 24d) report the identifier(s) (42) of their communications output(s) (24a, 24b, 24c, 24d) to a central software module (14).

7. The method according to one of the preceding claims, wherein the method comprises an initialization phase (44), in which all software modules (12a, 12b, 12c, 16) having at least one communications input (22a, 22b, 22c, 22d) retrieve the identifier (42) from the central software module (14) that is assigned in the accompanying entry (20a, 20b, 20c), wherein, after retrieved, the identifier (42) is stored in the respective software module (12a, 12b, 12c, 16) that retrieved the identifier (42).

8. The method according to claim 7, wherein the initialization completion phase (44) follows the initialization phase (40), and is performed once all software modules (12a, 12b, 12c, 16) having at least one communications output (24a, 24b, 24c, 24d) have notified the central software module (14) that they have disclosed their identifiers (42).

9. The method according to claim 7 or 8, wherein one of the software modules (12a, 12b, 12c, 16) notifies the central software module (14) in the initialization completion phase (44) if its communications input (22a, 22b, 22c, 22d) is assigned an identifier (42) that does not correspond to any communications input (22a, 22b, 22c, 22d), or if the configuration list (18) contains no entry (20a, 20b, 20c) that assigns an identifier (42) to the communications input (22a, 22b, 22c, 22d).

10. The method according to one of the preceding claims, wherein the method comprises an operating phase (46), in which the communications input (22a, 22b, 22c, 22d) of one of the software modules (12a, 12b, 12c, 16) retrieves data from the communications output (24a, 24b, 24c, 24d).

11. The method according to claim 10, wherein data are retrieved cyclically for several software modules (12a, 12b, 12c, 14, 16) and/or at the request of a software module (12a, 12b, 12c, 14, 16) for several software modules (12a, 12b, 12c, 14, 16).

12. The method according to one of the preceding claims, wherein a single one of the software modules (12a, 12b, 12c, 14, 16), specifically an interface software module (16), provides an interface between the operating software (10) and a hardware of the wind turbine (100), and the interface software module (16) provides all hardware inputs as communications inputs (22a, 22b, 22c, 22d) and all hardware outputs as communications outputs (24a, 24b, 24c, 24d).

13. A computer program product comprising instructions which, when executed on a wind turbine controller, are set up to implement the method according to one of claims 1 to 12.

14. A wind turbine controller for a wind turbine (100), which by means of a computer program product according to claim 13 is set up to implement the method according to one of claims 1 to 12.

15. A wind turbine (100) with a controller according to claim 14.

## Revendications

1. Procédé pour faire fonctionner une éolienne (100), comprenant l'étape exécutée par une commande d'une éolienne :
a) de fourniture de plusieurs modules de logiciel (12a, 12b, 12c, 16) en tant qu'un logiciel d'exploitation (10) destiné à faire fonctionner l'éolienne (100), dans lequel les modules de logiciel (12a, 12b, 12c, 16) présentent respectivement au moins une entrée de communication (22a, 22b, 22c, 22d) et/ou au moins une sortie de communication (24a, 24b, 24c, 24d),
**caractérisé par**
les autres étapes exécutées par la commande d'une éolienne :
b) de fourniture d'une liste de configurations (18) avec plusieurs entrées (20a, 20b, 20c), dans lequel les entrées sont associées respectivement à une entrée de communication (22a, 22b, 22c, 22d) d'un module de logiciel (12a, 12b, 12c, 16), à une sortie de communication (24a, 24b, 24c, 24d) d'un autre module de logiciel (12a, 12b, 12c, 16),
c) de transmission, pour chaque entrée (20a, 20b, 20c) respectivement, d'informations de l'entrée (20a, 20b, 20c) respective au module de logiciel (12a, 12b, 12c, 16) des modules de logiciel (12a, 12b, 12c, 16) avec l'au moins une entrée de communication (22a, 22b, 22c, 22d) qui est associée à un autre module de logiciel (12a, 12b, 12c, 16) dans l'entrée (20a, 20b, 20c) respective, lesquelles permettent au module de logiciel (12a, 12b, 12c, 16) d'accéder à des données de la sortie de communication (24a, 24b, 24c, 24d) de l'autre module de logiciel (12a, 12b, 12c, 16), qui est associé à l'entrée de communication (22a, 22b, 22c, 22d) dans l'entrée (20a, 20b, 20c),
d) de fonctionnement de l'éolienne (100) avec les modules de logiciel (12a, 12b, 12c, 16).

2. Procédé selon la revendication 1, dans lequel les étapes a) à c) sont exécutées une fois après une activation (29) ou la mise en service ou le redémarrage d'une commande de l'éolienne (100).

3. Procédé selon la revendication 1 ou 2, dans lequel un identificateur (42) est associé à au moins chaque sortie de communication (24a, 24b, 24c, 24d), et les informations comprennent l'identificateur (42) respectif de la sortie de communication (24a, 24b, 24c, 24d) associée.

4. Procédé selon l'une quelconque des revendications précédentes, dans lequel une variable (48), qui est désignée également par symbole, est associée à chaque sortie de communication (24a, 24b, 24c, 24d), et des données de sortie d'une sortie de communication (24a, 24b, 24c, 24d) ou une copie des données de sortie d'une sortie de communication (24a, 24b, 24c, 24d) sont fournies dans la variable (48) associée.

5. Procédé selon l'une quelconque des revendications précédentes, dans lequel au moins une entrée de communication (22a, 22b, 22c, 22d), qui est mise au point pour recevoir des signaux de commande, renvoie des données ou une confirmation de réception à la sortie de communication (24a, 24b, 24c, 24d) associée.

6. Procédé selon l'une quelconque des revendications précédentes, dans lequel le procédé comprend une phase d'initialisation (40), dans laquelle tous les modules de logiciel (12a, 12b, 12c, 16), qui présentent au moins une sortie de communication (24a, 24b, 24c, 24d), communiquent à un module de logiciel central (14) l'identificateur ou les identificateurs (42) de leur ou leurs sortie(s) de communication (24a, 24b, 24c, 24d).

7. Procédé selon l'une quelconque des revendications précédentes, dans lequel le procédé comprend une phase de fin d'initialisation (44), dans laquelle tous les modules de logiciel (12a, 12b, 12c, 16), qui présentent au moins une entrée de communication (22a, 22b, 22c, 22d), appellent l'identificateur (42) depuis le module de logiciel central (14), qui est associé à l'entrée (20a, 20b, 20c) associée, dans lequel l'identificateur (42) est mémorisé après l'appel dans le module de logiciel (12a, 12b, 12c, 16) respectif, qui a appelé l'identificateur (42).

8. Procédé selon la revendication 7, dans lequel la phase de fin d'initialisation (44) suit la phase d'initialisation (40) puis est exécutée lorsque tous les modules de logiciel (12a, 12b, 12c, 16), qui présentent au moins une sortie de communication (24a, 24b, 24c, 24d), ont notifié au module de logiciel central (14) qu'ils ont communiqué leurs identificateurs (42).

9. Procédé selon la revendication 7 ou 8, dans lequel, dans la phase de fin d'initialisation (44), un des modules de logiciel (12a, 12b, 12c, 16) notifie au module de logiciel central (14), lorsqu'est associé à son entrée de communication (22a, 22b, 22c, 22d), un identificateur (42), qui ne correspond à aucune entrée de communication (22a, 22b, 22c, 22d) ou qu'aucune entrée (20a, 20b, 20c) n'est présente dans la liste de configurations (18), laquelle associe un identificateur (42) à l'entrée de communication (22a, 22b, 22c, 22d).

10. Procédé selon l'une quelconque des revendications précédentes, dans lequel le procédé comprend une phase de fonctionnement (46), dans laquelle un des modules de logiciel (12a, 12b, 12c, 16) appelle avec son entrée de communication (22a, 22b, 22c, 22d) des données de la sortie de communication (24a, 24b, 24c, 24d) .

11. Procédé selon la revendication 10, dans lequel un appel de données est effectué de manière cyclique pour plusieurs modules de logiciel (12a, 12b, 12c, 14, 16) et/ou à la demande d'un module de logiciel (12a, 12b, 12c, 14, 16) pour plusieurs modules de logiciel (12a, 12b, 12c, 14, 16).

12. Procédé selon l'une quelconque des revendications précédentes, dans lequel un seul des modules de logiciel (12a, 12b, 12c, 14, 16), à savoir un module de logiciel d'interface (16), fournit une interface entre le logiciel d'exploitation (10) et un matériel de l'éolienne (100) et toutes les entrées de matériel en tant qu'entrées de communication (22a, 22b 22c, 22d) et toutes les sorties de matériel en tant que sorties de communication (24a, 24b, 24c, 24d) sont fournies par le module de logiciel d'interface (16).

13. Produit-programme d'ordinateur, qui comprend des instructions qui, lorsqu'elles sont exécutées sur une commande d'éolienne, sont mises au point pour exécuter le procédé selon l'une quelconque des revendications 1 à 12.

14. Commande d'éolienne pour une éolienne (100), qui est mise au point par un produit-programme d'ordinateur selon la revendication 13 pour exécuter le procédé selon l'une quelconque des revendications 1 à 12.

15. Eolienne (100) avec une commande selon la revendication 14.
